(19) Europäisches Patentamt
European Patent Office
Office européen des brevets

(11) Veröffentlichungsnummer: **0 014 260**
**B1**

# (12) EUROPÄISCHE PATENTSCHRIFT

(45) Veröffentlichungstag der Patentschrift: **02.06.82**

(51) Int. Cl.³: **C 07 F 9/52**

(21) Anmeldenummer: **79105359.8**

(22) Anmeldetag: **24.12.79**

## (54) Verhinderung von Feststoffabscheidungen in Methyldichlorphosphan enthaltenden Gemischen.

(30) Priorität: **13.01.79 DE 2901298**

(43) Veröffentlichungstag der Anmeldung: **20.08.80 Patentblatt 80/17**

(45) Bekanntmachung des Hinweises auf die Patenterteilung: **02.06.82 Patentblatt 82/22**

(84) Benannte Vertragsstaaten: **AT BE CH DE FR GB IT NL**

(56) Entgegenhaltungen:
**DE-A-2 724 407**
**DE-B-2 633 661**
**DE-B-2 718 391**
**US-A-3 519 685**

(73) Patentinhaber: **HOECHST AKTIENGESELLSCHAFT, Postfach 80 03 20, D-6230 Frankfurt/Main 80 (DE)**

(72) Erfinder: **Ohorodnik, Alexander, Dr., Kastanienweg 24, D-5042 Erftstadt (DE)**
Erfinder: **Gehrmann, Klaus, Dr., Geschwister-Scholl-Strasse 32, D-5042 Erftstadt (DE)**
Erfinder: **Auer, Eberhard, Dr., Franz-Rüth-Strasse 12, D-5042 Erftstadt (DE)**
Erfinder: **Schäfer, Stefan, Wittelsbacher Strasse 21, D-5040 Brühl (DE)**

**EP 0 014 260 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verhinderung von Feststoffabscheidungen in Methyldichlorphosphan enthaltenden Gemischen

Es ist bekannt, daß bei der Herstellung von Methyldichlorphosphan aus Phosphortrichlorid und Methan bei Temperaturen oberhalb 500°C nach dem Verflüssigen der kondensierbaren Bestandteile des Reaktionsgemisches in einer Quenchzone die Aufarbeitung des hierbei anfallenden Rohproduktes erhebliche Schwierigkeiten bereitet. Diese Schwierigkeiten sind vorwiegend eine Folge der besonderen Eigenschaft dieses Rohproduktes, beim Stehen bei Raumtemperatur, besonders aber beim Erhitzen, teerige bis feste Stoffe auszuscheiden. Wider Erwarten lassen sich diese Verunreinigungen auch destillativ nicht entfernen. So bleibt auch ein frisch destilliertes Roh-Methyldichlorphosphan nur kurze Zeit klar; bei Raumtemperatur, schneller noch im Temperaturbereich des Siedepunktes, trübt sich die Flüssigkeit und lagert anschließend Feststoffe an den Gefäßwänden ab. Dieses außergewöhnliche Verhalten des Roh-Methyldichlorphosphans erfordert einerseits eine Begrenzung des $PCl_3$-Umsatzes — die Neigung zur Feststoffabscheidung steigt überproportional mit dem $PCl_3$-Umsatz — und führt andererseits zur Verschmutzung der Wärmetauscher und Rohrleitungen, wodurch der Aufarbeitungsaufwand beträchtlich ansteigt.

In der DE-C1-2 631 608 und der DE-B1-2 718 391 werden die Schwierigkeiten, die bei der destillativen Aufbereitung von Roh-Methyldichlorphosphan auftreten, bereits eingehend erörtert und zu ihrer Überwindung vorgeschlagen, dem in einer Quenchzone verflüssigten Reaktionsgemisch 0,3 bis 3 Gew.-% einer organischen Bariumverbindung oder 0,3 bis 5 Gew.-% eines nichtionischen Tensids beizumischen. Diese oberflächenaktiven Zusätze verhindern im wesentlichen die Ablagerungen der bereits gebildeten Feststoffe in den Aufarbeitungsapparaturen.

Die DE-A1-2 724 407 und DE-B1-2 633 661 beschreiben Verfahren zur Gewinnung reinen Methyldichlorphosphans aus überwiegend Phosphortrichlorid und Methyldichlorphosphan enthaltenden Gemischen durch Destillation, wobei in einer ersten Destillationsstufe Phosphortrichlorid und andere Leichtsieder über Kopf abdestilliert werden, während man aus dem in eine zweite Destillationsstufe überführten Sumpf reines Methyldichlorphosphan von Hochsiedern abdestilliert, und wobei man in dem Gemisch vor Eintritt in die erste Destillationsstufe 0,1 bis 10 Gew.-% eines nicht-ionischen Tensids oder 0,01 bis 1 Gew.-% einer organischen Bariumverbindung als Stabilisator für Methyldichlorphosphan löst und den Sumpf der ersten Destillationsstufe noch vor seiner Überführung in die zweite Destillationsstufe mit 1—10 Gew.-% Phosphoroxychlorid versetzt.

Die US-A-3 519 685 beschreibt ein Reinigungsverfahren, bei dem zu einer Mischung aus Phosphortrichlorid, Methyldichlorphosphan und Nebenprodukten große Mengen von z. B. Phenol zugefügt werden, die mit Phosphortrichlorid reagieren, woraufhin reines Methyldichlorphosphan abdestilliert werden kann. Da das Reaktionsprodukt aus Phosphortrichlorid und Phenol offenbar verworfen werden muß, ist dieses Verfahren höchstens in Ausnahmefällen wirtschaftlich durchführbar.

Es wurde nun gefunden, daß man die bisherigen Verfahren zur Aufarbeitung von Roh-Methyldichlorphosphan weiter verbessern kann, wenn man dem aufzuarbeitenden Rohprodukt statt dessen einen anderen Typ stabilisierend wirkender Verbindungen zusetzt.

Zum Typ des erfindungsgemäß geeigneten Stabilisators gehören außer Phosphorsäure alle in methyldichlorphosphanhaltigen Gemischen löslichen Verbindungen, die mindestens 1 saure Gruppe aus der Stoffklasse der Phosphorsäure, Phosphonsäure, Sulfonsäure, Phosphonigsäure, Thiophosphorsäure oder Dithiophosphorsäure enthalten. Diese als Stabilisatoren bezeichneten Verbindungen haben nicht nur die Eigenschaft, die Ablagerung bereits ausgefallener Feststoffe zu verhindern, sondern auch die Fähigkeit, die Feststoffbildung wirksam zu unterbinden, d. h., wenn man zu einem frisch destillierten, klaren Rohprodukt einen der genannten Stabilisatoren zusetzt, bleibt das stabilisierte, methyldichlorphosphanhaltige Produkt klar.

Im einzelnen betrifft die Erfindung nunmehr ein Verfahren zur Verhinderung von Feststoffabscheidungen in Methyldichlorphosphan enthaltenden Gemischen, welches dadurch gekennzeichnet ist, daß man dem Gemisch Phosphorsäure oder eine lösliche Verbindung, die mindestens eine saure Gruppe aus der Stoffklasse der Phosphorsäure, Phosphonsäure, Sulfonsäure, Phosphonigsäure, Thiophosphorsäure oder Dithiophosphorsäure enthält, als Stabilisator zusetzt.

Den Stabilisator kann man zweckmäßig in einer Menge von 0,1 bis 5, vorzugsweise 0,3 bis 3, Gew.-% zusetzen. Insbesondere kann man mindestens eine der nachfolgenden Verbindungen als Stabilisatoren zusetzen:

$CH_3(CH_2)_7—PO(OH)_2$

$CH_3—(CH_2)_{11}—C_6H_4—SO_3H$

$(iso\text{-}C_{13}H_{27}O)_2P(O)OH$

$C_{13}H_{27}OPO(OH)_2$

$(C_{13}H_{27}O)_2P(O)OH$

$(C_4H_9)_3C_6H_2—O—(CH_2CH_2O)_4PO(OH)_2$

$[(C_4H_9)_3C_6H_2—O—(CH_2CH_2O)_4]_2P(O)OH$

$C_6H_5—O—(CH_2CH_2O)_6PO(OH)_2$

$[C_6H_5—O—(CH_2CH_2O)_6]_2P(O)OH$

$CH_3(CH_2)_7CH=CH(CH_2)_7CH_2—O—(CH_2CH_2O)_5PO(OH)_2$

$[CH_3(CH_2)_7CH=CH(CH_2)_7CH_2—O—(CH_2CH_2O)_5]_2P(O)OH$

$C_4H_9CH(C_2H_5)—CH_2—O—PO(OH)_2$

$[C_4H_9CH(C_2H_5)—CH_2—O]_2P(O)OH$

$(CH_3O)_2P(S)SH$

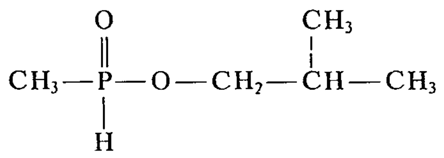

Die Erkenntnis, daß klare methyldichlorphosphanhaltige Produkte sich ohne besondere Schwierigkeiten zu reinem Methyldichlorphosphan aufarbeiten lassen, kann zur Bestimmung der Wirksamkeit eines Stabilisators dienen.

Die Prüfung der Stabilisatorwirksamkeit basiert darauf, daß die Trübung eines methyldichlorphosphanhaltigen Gemisches die Vorstufe der Feststoffabscheidung darstellt und der Trübungsgrad als Massenkonzentration diskreter Partikel in einer Flüssigkeitsprobe physikalisch genau gemessen werden kann. Das physikalische Prinzip der Trübungsmessung basiert auf der Lichtdurchlässigkeit einer Flüssigkeitsprobe und kann somit optisch gemessen werden. Bei der Untersuchung der Wirksamkeit verschiedener Stabilisatoren auf das Verhalten methyldichlorphosphanhaltiger Produkte wurde der Trübungsmesser Modell 150 der Firma Elektrofact, Dormagen, eingesetzt. Bei dieser Meßmethode wurde die Trübung in ppm angegeben.

Eine experimentelle Untersuchung der Zusammenhänge zwischen der Feststoffablagerung und dem Trübungsgrad hat gezeigt, daß bei der Handhabung methyldichlorphosphanhaltiger Produkte Störungen durch Feststoffablagerungen bei einer Feststoffkonzentration ab 100 ppm auftreten.

Wie die nachstehend angeführten Beispiele zeigen, kann man die stabilisierende Wirkung einer Verbindung auf das Verhalten eines methyldichlorphosphanhaltigen Gemisches mittels der vorgeschlagenen Trübungsmessung auf einem einfachen physikalischen Weg genau ermitteln.

## Beispiel 1

100 g frisch destilliertes Roh-Methyldichlorphosphan, bestehend aus:

| | |
|---|---|
| Phosphortrichlorid | 73,0 Gew.-% |
| Tetrachlorkohlenstoff | 4,0 Gew.-% |
| Chloroform | 2,0 Gew.-% |
| Methyldichlorphosphan | 17,0 Gew.-% |
| Dimethylchlorphosphan und unbekannte Komponenten | Rest |

wurden jeweils in drei Meßküvetten eingefüllt und die Trübung in der 1. Küvette nach 1 Stunde, in der 2. nach 50 Stunden und in der 3. nach 5 Minuten Kochen unter Rückfluß gemessen. Die Meßergebnisse sind der nachstehenden Tabelle zu entnehmen.

## Beispiel 2

Je 100 g eines frisch destillierten Roh-Methyldichlorphosphans der gleichen Zusammensetzung wie im Beispiel 1 wurden mit 0,5 g Dodecylbenzolsulfonsäure $CH_3—(CH_2)_{11}—C_6H_4—SO_3H$ versetzt und der gleichen Behandlung wie im Beispiel 1 unterzogen. Für Vergleichszwecke werden alle Meßergebnisse in der nachstehenden Tabelle zusammengefaßt.

Beispiele 3—12

In analoger Weise wurden folgende Substanzen untersucht:

Beispiel 3: Phosphorsäure
$PO(OH)_3$

Beispiel 4: Oktanphosphonsäure
$CH_3(CH_2)_7PO(OH)_2$

Beispiel 5: Di-iso-Tridecylphosphorsäureester
$(iso\text{-}C_{13}H_{27}O)_2P(O)OH$

Beispiel 6: Gemisch aus Mono- und Di-Tridecylphosphorsäureester
$C_{13}H_{27}OPO(OH)_2$ und $(C_{13}H_{27}O)_2P(O)OH$

Beispiel 7: Gemisch aus Mono- und Di-Phosphorsäureester des Tributylphenoltetraglykoläthers
$(C_4H_9)_3C_6H_2—O—(CH_2CH_2O)_4PO(OH)_2$
und
$[(C_4H_9)_3C_6H_2—O—(CH_2CH_2O)_4]_2P(O)OH$

Beispiel 8: Gemisch aus Mono- und Di-Phosphorsäureester des Phenylhexaglykoläthers
$C_6H_5—O—(CH_2CH_2O)_6PO(OH)_2$
und
$[C_6H_5—O—(CH_2CH_2O)_6]_2P(O)OH$

Beispiel 9: Gemisch aus Mono- und Di-Phosphorsäureester des Oleylpentaglykoläthers
$CH_3(CH_2)_7CH{=}CH(CH_2)_7CH_2—O—(CH_2CH_2O)_5PO(OH)_2$
und
$[CH_3(CH_2)_7CH{=}CH(CH_2)_7CH_2—O—(CH_2CH_2O)_5]_2P(O)OH$

Beispiel 10: Gemisch aus Mono- und Di-Hexyl($\beta$-äthyl)phosphorsäureester
$C_4H_9CH(C_2H_5)—CH_2—O—PO(OH)_2$
und
$[C_4H_9CH(C_2H_5)—CH_2—O]_2P(O)OH$

Beispiel 11: O,O-Dimethyldithiophosphorsäure
$(CH_3O)_2P(S)SH$

Beispiel 12: Methanphosphonigsäure-isobutylester

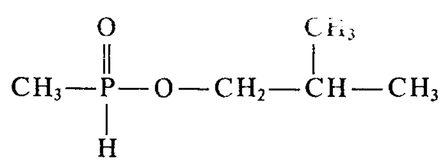

Tabelle

| Beispiele | ppm Feststoff nach 1 h | ppm Feststoff nach 50 h | ppm Feststoff nach 5 min Kochen |
|---|---|---|---|
| 1 (ohne Zusatz) | >100 | >1000 | >1000 |
| 2 | <10 | <10 | <10 |
| 3 | <10 | <10 | <10 |
| 4 | <10 | ~100 | <10 |
| 5 | <10 | <10 | <10 |
| 6 | <10 | <10 | <10 |
| 7 | ~50 | 50 | 50 |
| 8 | 10 | 100 | <10 |
| 9 | <10 | <10 | <10 |
| 10 | <10 | 300 | 100 |
| 11 | 50 | 50 | 100 |
| 12 | 50 | 50 | 100 |

**Patentansprüche**

1. Verfahren zur Verhinderung von Feststoffabscheidungen in Methyldichlorphosphan enthaltenden Gemischen, dadurch gekennzeichnet, daß man dem Gemisch Phosphorsäure oder eine lösliche Verbindung, die mindestens eine saure Gruppe aus der Stoffklasse der Phosphorsäure, Phosphonsäure, Sulfonsäure, Phosphonigsäure, Thiophosphorsäure oder Dithiophosphorsäure enthält, als Stabilisator zusetzt.

2. Verfahren nach Anspruch 1, dadurch gekennzeichnet, daß man den Stabilisator in einer Menge von 0,1 bis 5, vorzugsweise 0,3 bis 3 Gew.-%, zusetzt.

**Claims**

1. Process for inhibiting the deposition of solid matter in mixtures containing methyldichlorophosphane, characterized in that the mixture has phosphoric acid or a soluble compound containing at least one acid group selected from the class of phosphoric acid, phosphonic acid, sulfonic acid, phosphonous acid, thiophosphoric acid or dithiophosphoric acid added thereto as a stabilizer.

2. Process as claimed in claim 1, wherein the stabilizer is used in a proportion of 0.1 to 5 weight %, preferably 0.3 to 3 weight %.

**Revendications**

1. Procédé pour empêcher les dépôts solides dans les mélanges contenant de la méthyldichlorophosphine, caractérisé en ce que l'on ajoute au mélange comme stabilisant de l'acide phosphorique ou un composé soluble qui contient au moins un groupe acide choisi dans la classe de l'acide phosphorique, de l'acide phosphonique, de l'acide sulfonique, de l'acide phosphoneux, de l'acide thiophosphorique ou de l'acide dithiophosphorique.

2. Procédé selon la revendication 1, caractérisé en ce que l'on utilise le stabilisant en quantité de 0,1 à 5, de préférence de 0,3 à 3% en poids.